# EUROPÄISCHE PATENTSCHRIFT

(11) **EP 1 334 651 B1**
(45) Veröffentlichungstag und Bekanntmachung des Hinweises auf die Patenterteilung: **13.02.2008**
(21) Anmeldenummer: 03100182.9
(22) Anmeldetag: 29.01.2003
(51) Int. Cl.: A01D 45/02

(54) **Maschine zum Mähen von stängelartigem Erntegut**
Machine for mowing stalk crops
Machine pour faucher des plantes à tiges

(30) Priorität: 07.02.2002 DE 10204950
(43) Veröffentlichungstag der Anmeldung: 13.08.2003
(73) Patentinhaber: Maschinenfabrik Kemper GmbH & Co. KG, 48703 Stadtlohn (DE)
(72) Erfinder: Wübbels, Richard, 46414, Rhede (DE)
(74) Vertreter: Holst, Sönke

(56) Entgegenhaltungen:
- EP-A- 0 685 149
- EP-A- 0 760 200
- EP-A- 0 860 106
- EP-A- 0 882 389
- EP-A- 1 008 291
- EP-A- 1 010 363
- US-A- 5 237 804

## Beschreibung

Die Erfindung betrifft eine Maschine zum Mähen von stängelartigem Erntegut, mit einer oder mehreren, seitlich nebeneinander angeordneten Einzugs- und Mäheinrichtungen zum Abschneiden und Fördern des Ernteguts und einem Förderkanal, durch den das Erntegut mittels einer mit Mitnehmern ausgestatteten, antreibbaren Fördereinrichtung in den Einzugskanal einer Erntemaschine förderbar ist, wobei der Förderkanal eine der Fördereinrichtung benachbarte Wand und eine Wand auf der der Fördereinrichtung gegenüber liegenden Seite des Förderkanals aufweist.

Bei Maiserntegeräten größerer Arbeitsbreite sind in der Regel mehrere Einzugs- und Mäheinrichtungen seitlich nebeneinander angeordnet. Das Gut von den Einzugs- und Mäheinrichtungen wird durch Förderer in Querrichtung transportiert und dann nach hinten in eine Erntemaschine gefördert. Zur Überbrückung des Höhenunterschieds zwischen dem Maiserntegerät und dem Einzug der Erntemaschine können Schrägförderer eingesetzt werden, die auch gleichzeitig als Querförderer dienen können und denen das Gut von einer (EP 0 508 189 A) oder zwei Einzugs- und Mäheinrichtungen zugeführt wird (EP 0 685 149 A). Durch die Schrägförderer vermeidet man, dass die Achse der Einzugs- und Mäheinrichtungen schräg nach vorn zu stellen ist. In der DE 40 02 344 A ist ein Maiserntegerät beschrieben, bei dem einer großen um die Hochachse drehbaren Trommel, die das Gut zunächst seitlich zur Mitte und dann nach hinten fördert, drei kleinere Mähtrommeln vorgelagert sind. Der Quertransport an der Rückseite der Einzugs- und Mäheinrichtungen kann durch Querförderer im Zusammenwirken mit den Einzugs- und Mäheinrichtungen erfolgen (EP 0 760 200 A) oder unabhängig davon (EP 1 008 291 A).

Eine andere Maschine zum Mähen von stängelartigem Erntegut wird in der EP 0 882 389 A beschrieben. Dort sind größere Einzugsvorrichtungen, die das Erntegut an ihren Rückseiten zur Mitte der Maschine fördern, mit Mitnehmerzahnkränzen hinter kleineren Schneidvorrichtungen angeordnet. Die Zähne der Mitnehmerzahnkränze und der Schneidvorrichtungen überdecken sich zwar geringfügig, aber die Zähne der Mitnehmerzahnkränze reichen nicht bis zum Zahngrund der Zähne der Schneidvorrichtungen.

Es ist insbesondere beim Umlenken der Pflanzen möglich, dass beim Erntevorgang Teile von Pflanzen herunterfallen, vornehmlich die relativ schweren Fruchtstände von Maispflanzen. Bei den bekannten Maschinen fallen die Pflanzenteile auf Abdeckungen oder andere Maschinenteile und von dort - oder direkt - auf den Erdboden, so dass sie aus dem Ernteprozess verloren gehen.

Das der Erfindung zugrunde liegende Problem wird darin gesehen, eine verbesserte Maschine zum Mähen von stängelartigem Erntegut bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt vor, an einer beliebigen Stelle des Förderkanals, durch den die geernteten Pflanzen von den Einzugs- und Mäheinrichtungen zum Einzugskanal einer Erntemaschine gefördert werden, oberhalb des Förderkanals Mitnehmer einer Fördereinrichtung anzuordnen, deren Hüllkreis sich an der gegenüberliegenden Seite über die dortige Wand des Förderkanals hinaus erstreckt. Die Fördereinrichtung ist in der Regel ein von der Einzugs- und Mäheinrichtung getrennter Förderer; es kann sich aber auch um eine Einzugs- und Mäheinrichtung handeln, die mit entsprechenden Mitnehmern versehen ist. Zwischenräume zwischen den Mitnehmern überdecken den Förderkanal vorzugsweise nicht. Die Fördereinrichtung wirkt in der Regel auch mit den Pflanzenteilen zusammen, die sich im eigentlichen Förderkanal befinden.

Auf diese Weise erhält man eine sehr kompakte Fördereinrichtung, die aber einen großen Wirkungsbereich aufweist.

Auf der der Fördereinrichtung gegenüber liegenden Seite des Förderkanals kann sich eine Abdeckung befinden, die sich an den Förderkanal anschließt. Die überstehenden Mitnehmer der Fördereinrichtung können eventuell heruntergefallenes Erntegut von der Abdeckung oder anderen Maschinenteilen entfernen und wieder in den Gutstrom einfügen. Unter der Abdeckung kann sich insbesondere eine Einzugs- und Mäheinrichtung befinden.

Als Fördereinrichtung kommt insbesondere ein Trommelförderer mit zumindest näherungsweise vertikaler Drehachse in Frage. Denkbar wäre aber auch die Verwendung eines Gurtförderers. Ein geeigneter Trommelförderer umfasst wenigstens eine erste Förderscheibe oder ein anderes, Mitnehmer umfassendes Element, die oder das innerhalb des Förderkanals angeordnet ist. Darüber ist eine zweite Förderscheibe oder ein beliebiges anderes, Mitnehmer tragendes Element angeordnet, deren Mitnehmer den sich über den Förderkanal ausdehnenden Hüllkreis aufweisen. Ihr Hüllkreis ist auch größer als der der Mitnehmer im Förderkanal. Die Mitnehmer im Förderkanal und/oder die sich darüber hinaus ausdehnenden Mitnehmer können in beliebig vielen Ebenen übereinander angeordnet sein. Weiterhin können oberhalb der sich über den Förderkanal hinaus erstreckenden Mitnehmer weitere Mitnehmer angeordnet sein, deren Hüllkreis wiederum demgegenüber kleiner ist.

Die Fördereinrichtung kann zur Querförderung des Guts von seitlich der Mitte der Maschine angeordneten Einzugs- und Mäheinrichtungen in Richtung auf die Mitte der Maschine zu dienen. Sie kann es alternativ oder zusätzlich entgegen der Fahrtrichtung nach hinten zum Einzugskanal einer die Maschine tragenden Erntemaschine transportieren. Vorzugsweise ist sie als Schrägförderer ausgebildet, die das Gut schräg und nach hinten transportiert. In einer Ausführungsform findet eine hinreichend große Fördereinrichtung Verwendung, die sowohl als Quer- als auch als Schrägförderer dient, um das Gut zuerst seitlich und dann nach hinten und schräg nach oben in den Einzugskanal der Erntemaschine zu fördern. Dann erledigt die Fördereinrichtung die ansonsten von zwei Förderern gelösten Aufgaben. Die sich über den Querförderkanal hinaus erstreckenden Mitnehmer der Fördereinrichtung dienen im Schrägförderbereich als aggressive Zinken für die Schrägförderung.

In einer besonders vorteilhaften Ausführungsform der Erfindung ist die Fördereinrichtung hinter einem quer zur Fahrtrichtung orientierten Förderkanal angeordnet und dreht sich gegensinnig zu der stromauf zu ihr liegenden Einzugs- und Mäheinrichtung. Die vor ihr liegende Einzugs- und Mäheinrichtung kann sich entweder gleichsinnig mit der Einzugs- und Mäheinrichtung drehen, von der die Fördereinrichtung mit Gut beaufschlagt wird, oder gegensinnig dazu. Die letztgenannte Variante hat den Vorteil, dass das Gut von der vor der Fördereinrichtung liegenden Einzugs- und Mäheinrichtung direkt (ohne Umlenkung) nach hinten in den Einzugskanal der Erntemaschine abgegeben werden kann, während allein die hinreichend groß dimensionierte Fördereinrichtung die Förderung des Guts von der stromauf zu ihr liegenden Einzugs- und Mäheinrichtung in den Einzugskanal bewerkstelligen kann. Da sich die Fördereinrichtung und die vor ihr liegende Einzugs- und Mäheinrichtung gleichsinnig drehen, zwischen ihnen aber der Förderkanal liegt, wird letzter nach vorn durch eine Wand von der davor liegenden Einzugs- und Mäheinrichtung getrennt.

In den Zeichnungen ist ein nachfolgend näher beschriebenes Ausführungsbeispiel der Erfindung dargestellt. Es zeigt:
- Fig. 1: eine Draufsicht auf eine erfindungsgemäße Maschine zum Mähen von stängelartigem Erntegut, und
- Fig. 2: einen Querschnitt durch die in Figur 1 dargestellte Maschine entlang der Linie 2-2.

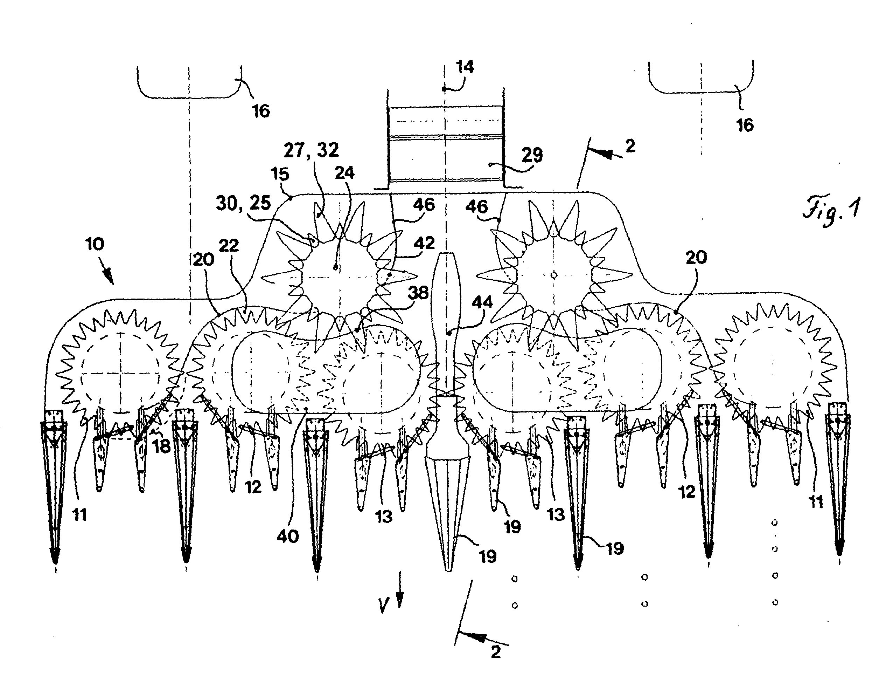

Die in Figur 1 dargestellte Maschine 10 zum Mähen von stängelartigem Erntegut weist sechs als Einzugs- und Mäheinrichtungen dienende Einzugs- und Mähtrommeln 11, 12 und 13 auf, die symmetrisch zu einer Längsmittelebene 14 der Maschine 10 angeordnet sind. Auf beiden Seiten der Längsmittelebene 14 sind je drei Einzugs- und Mähtrommeln 11, 12, 13 vorhanden. Die Maschine 10 wird von einem Rahmen 15 getragen. Der Rahmen wird von einer Erntemaschine in Form eines Feldhäckslers getragen, dessen vordere Räder 16 hinter der Maschine 10 eingezeichnet sind. Im Folgenden beziehen sich Richtungsangaben, wie vor, hinter und seitlich auf die Fahrtrichtung V der Maschine 10.

Die reihenunabhängig arbeitenden Einzugs- und Mähtrommeln 11, 12, 13 sind aus einer unteren Schneidscheibe 18, die um eine etwa vertikal verlaufende Achse rotiert, und koaxial darüber angeordneten Förderscheiben zusammengesetzt, deren Umfang mit taschenförmigen Aussparungen ausgestattet ist. Die Schneidscheiben 18 trennen die oberen Teile des Ernteguts von den im Boden verbleibenden Stoppeln ab. Die Stängel des Ernteguts, bei dem es sich insbesondere um Mais handelt, werden in den taschenförmigen Aussparungen der Förderscheiben aufgenommen und festgehalten. Anstelle aller oder einiger der dargestellten rotierenden Einzugs- und Mäheinrichtungen 11 - 13 können auch Einzugs- und Mäheinrichtungen verwendet werden, die auf endlosen Förderern basieren.

Den Einzugs- und Mähtrommeln 11, 12, 13 sind Halmteiler 19 vorgeordnet. Zwischen der Rückseite der Einzugs- und Mähtrommeln 11, 12, 13 und einer in ihrer Form an die Einzugs- und Mähtrommeln 12 angepassten Rückwand 20 der Maschine 10 ist ein quer zur Fahrtrichtung orientierter Förderkanal 22 gebildet, durch den das von den Einzugs- und Mähtrommeln 11, 12, 13 abgeerntete Gut seitlich zur Mitte der Maschine 10 transportiert wird.

Die beiden äußeren Einzugs- und Mähtrommeln 11 werden derart in Drehung versetzt, dass das geerntete Gut zunächst seitlich in Richtung auf die Längsmittelebene 14 zu und dann entgegen der Fahrtrichtung V der Maschine 10 nach hinten gefördert wird. Dort wird das Erntegut von der nächst inneren Einzugs- und Mähtrommel 12 übernommen. Diese Einzugs- und Mähtrommel 12 dreht sich gegensinnig zu der benachbarten äußeren Einzugs- und Mähtrommel 11, so dass sie das geerntete Gut zunächst seitlich nach außen und anschließend nach hinten fördern. An ihrer der äußeren Einzugs- und Mähtrommel 11 zugewandten Seite übernimmt die Einzugs- und Mähtrommel 12 das Erntegut von der äußeren Einzugs- und Mähtrommel 11. Ein Ausnehmer, der aus in den Hüllkreis der äußeren Einzugs- und Mähtrommel 11 eingreifenden Blechen aufgebaut ist und das Erntegut aus ihren taschenförmigen Aussparungen aushebt, bewirkt den Übergang des Ernteguts auf die Einzugs- und Mähtrommel 12, an deren Rückseite das Erntegut im Zusammenwirken mit der Rückwand 20 nach innen in Richtung auf die Längsmittelebene 14 zu gefördert wird.

Anschließend wird das Erntegut durch einen - nicht eingezeichneten - Ausnehmer aus den taschenförmigen Aussparungen der Einzugs- und Mähtrommel 12 herausgehoben und von einer dahinter angeordneten, rotierenden Fördereinrichtung 24 in Form einer kombinierten Quer- und Schrägfördertrommel mit leicht nach vorn geneigter Drehachse übernommen. Die Fördereinrichtung 24 ist aus einem zylindrischen Körper mit daran übereinander befestigten Förderscheiben 28, 30, 32 aufgebaut, um deren Umfang etwa dreieckig geformte Mitnehmer 25, 27 zur Förderung des Guts verteilt sind. Anstelle der zahnartigen Mitnehmer 25, 27 können auch Finger verwendet werden. Denkbar ist auch eine Steuerung der Mitnehmer 25 und/oder 27, die eine radiale Verschiebung und/oder azimutale Drehung der Mitnehmer 25 bzw. 27 bewirkt, um die Gutförderung zu verbessern. Der etwa quer zur Fahrtrichtung V orientierte Bereich der Fördereinrichtung 24 durchdringt Schlitze in der Rückwand 20. Die Rückwand 20 endet in der Nähe des zylindrischen Körpers der Quer- und Schrägfördertrommel 24.

Der Hüllkreis der Fördereinrichtung 24 taucht nicht in den Hüllkreis der Einzugs- und Mähtrommel 12 ein, es wäre aber denkbar, die Mitnehmer 25 entsprechend zu verlängern, so dass sie in diesen Hüllkreis eintauchen. Die Fördereinrichtung 24 fördert das Gut an einer in Fahrtrichtung V vor ihr liegenden festen (oder gegen eine Kraft beweglichen) Wand 38 entlang, die unterhalb einer die nächst äußere Einzugs- und Mähtrommel 12 und die innere Einzugs- und Mähtrommel 13 überdeckenden Abdeckung 40 angeordnet ist.

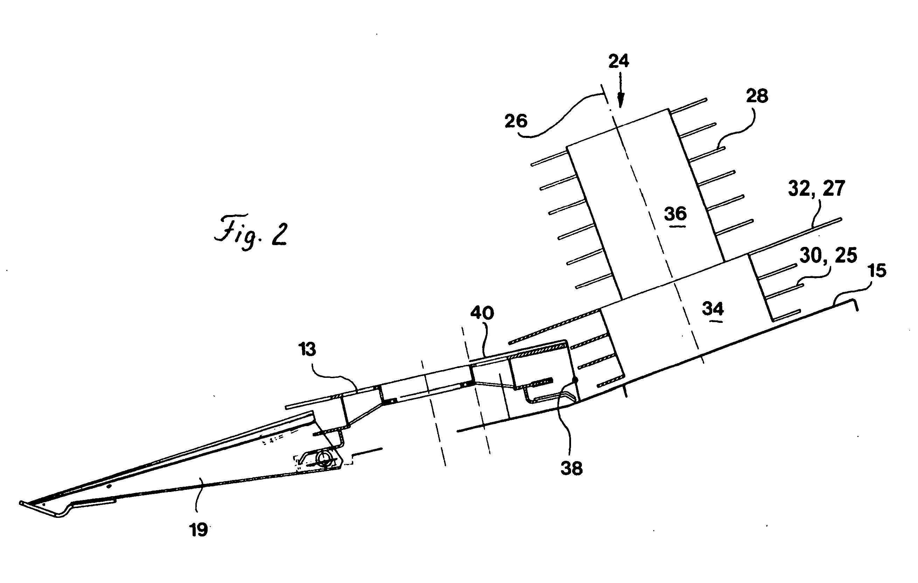

Da der Durchmesser der Fördereinrichtung 24 relativ groß und ihre Drehachse 26 nach vorn geneigt ist (s. Figur 2), dient sie auch als Umlenkfördereinheit, die das Gut im Anschluss an die Förderung entlang der Wand 38 nach hinten und oben in den Einzugskanal 29 der Erntemaschine fördert, in dem Einzugswalzen übereinander angeordnet sind. Die Fördereinrichtung 24 ist aus einem zylindrischen Körper mit übereinander angeordneten, gezahnten Förderscheiben 28, 30, 32 aufgebaut, in denen die Mitnehmer 25, 27 definiert sind. Die Fördereinrichtung 24 weist einen unteren Abschnitt 34 auf, der mit drei übereinander angeordneten Förderscheiben 30 versehen ist, um deren Umfänge Mitnehmer 25 verteilt sind. Die Höhe des unteren Abschnitts 34 entspricht etwa der Höhe des Förderkanals 22. Die unterste der Förderscheiben 30 hat einen etwas kleineren Durchmesser als die darüber angeordneten Förderscheiben 30. Am oberen Ende des unteren Abschnitts 34 befindet sich eine Förderscheibe 32 mit gegenüber den Förderscheiben 30 vergrößertem Durchmesser, an deren Umfang Mitnehmer 27 definiert sind, die sich bis über die Abdeckung 40 erstrecken. An den unteren Abschnitt 34 des Körpers der Fördereinrichtung 24 schließt sich ein oberer Abschnitt 36 an, dessen Durchmesser kleiner als der des unteren Abschnitts 34 ist. Der obere Abschnitt ist mit sechs übereinander angeordneten Förderscheiben 28 ausgestattet, deren Durchmesser kleiner als der der Förderscheiben 30 und größer als der Durchmesser des unteren Abschnitts 34 ist. Die Förderscheiben 30 des unteren Abschnitts 34 fördern im Wesentlichen die Teile des Guts, die sich im Förderkanal 22 befinden, während die größere Förderscheibe 32 die weiter oben liegenden Teile der Pflanzen fördert und eventuell von den Pflanzen abgefallene Teile, insbesondere Fruchtstände, von der Abdeckung 40 entfernt und wieder in den Gutstrom einfügt. Die oberen Förderscheiben 28 fördern ebenfalls die oberhalb des Förderkanals 22 stehenden, oberen Teile der Pflanzen.

Die Wand 38 bildet auch einen Ausnehmer für die inneren Einzugs- und Mähtrommeln 13. Ein anderer Ausnehmer 42 hebt das Erntegut abgabeseitig aus den Fördereinrichtungen 24 heraus. Stromab des Ausnehmers 42 gleitet das Gut an Seitenwänden 46 entlang, bis es den Einzugskanal 29 erreicht. Im Bereich zwischen den Fördereinrichtungen 24 wird das Gut durch die relativ langen Mitnehmer 27 aggressiv gefördert.

Die Fördereinrichtungen 24 wirken somit in einem Förderkanal 22 für das von den äußeren Einzugs- und Mähtrommeln 11, 12 geerntete Gut, der von den inneren Einzugs- und Mähtrommeln 13 getrennt und von ihnen unabhängig ist. Um diesen Förderkanal 22 realisieren zu können, ohne den Gutstrom darin in unerwünschter Weise umlenken zu müssen und ohne die in Fahrtrichtung V gemessene Länge der Maschine 10 zumindest im Bereich der mittleren und äußeren Einzugs- und Mähtrommeln 11, 12 wesentlich zu vergrößern, sind die Drehachsen der inneren Einzugs- und Mähtrommeln 13 gegenüber den anderen Einzugs- und Mähtrommeln 11, 12 in Fahrtrichtung V nach vorn versetzt. Der Antrieb der Einzugs- und Mähtrommeln 11, 12, 13 und der Fördereinrichtungen 24 erfolgt mittels geeigneter Getriebe durch die Erntemaschine.

Die inneren Einzugs- und Mähtrommeln 13 drehen sich gegenüber den nächst äußeren Einzugs- und Mähtrommeln 12 gegensinnig, so dass sie das Gut zunächst nach innen in Richtung auf die Längsmittelebene der Maschine 10 zu und dann nach hinten fördern, wenn die Maschine 10 beim Erntevorgang in Fahrtrichtung V über ein Feld bewegt wird. Das von den inneren Einzugs- und Mähtrommeln 13 geerntete Gut wird durch Ausnehmer daraus herausgehoben, strömt fast ohne Umlenkung durch einen zwischen einem mittigen, am Boden der Maschine 10 angeordneten Führungselement 44 und dem Ausnehmer liegenden Teil eines sich in Fahrtrichtung erstreckenden Kanals und vereinigt sich seitlich neben und geringfügig vor den Fördereinrichtungen 24 mit dem Gutstrom aus dem Förderkanal 22. Anschließend strömt der vereinte Gutstrom weiter geradlinig durch den Teil des Kanals, der sich zwischen dem Führungselement 44 und der Fördereinrichtung 24 befindet, in den Einzugskanal 29 der Erntemaschine, in der er gehäckselt und von der er auf einem Wagen abgelegt wird.

Die dargestellte Ausführungsform kann durch Hinzufügen von Einzugs- und Mähtrommeln 12 und im Zwickelbereich benachbarter Einzugs- und Mähtrommeln 12 angeordneter Querfördertrommeln in Ausführungsformen mit größerer Arbeitsbreite abgewandelt werden.

## Patentansprüche

1. Maschine (10) zum Mähen von stängelartigem Erntegut, mit einer oder mehreren, seitlich nebeneinander angeordneten Einzugs- und Mäheinrichtungen (11, 12, 13) zum Abschneiden und Fördern des Ernteguts und einem Förderkanal (22), durch den das Erntegut mittels einer mit Mitnehmern (25, 27) ausgestatteten, antreibbaren Fördereinrichtung (24) in den Einzugskanal (29) einer Erntemaschine förderbar ist, wobei der Förderkanal (22) eine der Fördereinrichtung (24) benachbarte Wand (20) und eine Wand (38) auf der der Fördereinrichtung (24) gegenüber liegenden Seite des Förderkanals (22) aufweist, **dadurch gekennzeichnet, dass** die Fördereinrichtung (24) oberhalb des Förderkanals (22) mit Mitnehmern (27) versehen ist, deren Hüllkreis sich auf der der Fördereinrichtung (24) gegenüberliegenden Seite des Förderkanals (22) über die dortige Wand (38) des Förderkanals (22) hinaus erstreckt.

2. Maschine (10) nach Anspruch 1, **dadurch gekennzeichnet, dass** auf einer der Fördereinrichtung (24) gegenüber liegenden Seite des Förderkanals (22) eine Abdeckung (40) angeordnet ist, die der Hüllkreis der Mitnehmer (27) überdeckt.

3. Maschine nach Anspruch 2, **dadurch gekennzeichnet, dass** sich unter der Abdeckung (40) wenigstens eine Einzugs- und Mäheinrichtung (12, 13) befindet.

4. Maschine (10) nach einem der Ansprüche 1 bis 3, **dadurch gekennzeichnet, dass** die Fördereinrichtung (24) ein Trommelförderer mit zumindest näherungsweise vertikaler Drehachse (26) ist.

5. Maschine (10) nach einem der Ansprüche 1 bis 4, **dadurch gekennzeichnet, dass** die Fördereinrichtung (24) eine im Förderkanal (22) angeordnete Anzahl an Mitnehmern umfasst, oberhalb denen die sich über den Förderkanal (22) hinaus erstreckenden Mitnehmer (27) angeordnet sind, wobei der Hüllkreis der sich über den Förderkanal (22) hinaus erstreckenden Mitnehmer (27) größer als der Hüllkreis der Mitnehmer im Förderkanal (22) ist.

6. Maschine nach einem der Ansprüche 1 bis 5, **dadurch gekennzeichnet, dass** die Fördereinrichtung (24) oberhalb der Mitnehmer (27) eine Anzahl von Mitnehmern (25) aufweist, deren Hüllkreis kleineren Durchmessers ist als der Hüllkreis der sich über den Förderkanal (22) hinaus erstreckenden Mitnehmer (27).

7. Maschine (10) nach einem der vorhergehenden Ansprüche, **dadurch gekennzeichnet, dass** die Fördereinrichtung (24) eingerichtet ist, das Gut quer zur Fahrtrichtung der Maschine (10) und/oder entgegen der Fahrtrichtung der Maschine (10) nach hinten in Richtung auf den Einzugskanal (29) einer Erntemaschine zu transportieren.

8. Maschine (10) nach einem der Ansprüche 1 bis 7, **dadurch gekennzeichnet, dass** die Fördereinrichtung (24) eingerichtet ist, das Gut schräg nach hinten und oben zu transportieren.

9. Maschine (10) nach einem der vorhergehenden Ansprüche, **dadurch gekennzeichnet, dass** die Fördereinrichtung (24) in Fahrtrichtung der Maschine (10) hinter einem sich quer zur Fahrtrichtung erstreckenden Förderkanal (22) angeordnet ist und gegensinnig zu einer Einzugs- und Mäheinrichtung (12) dreht, von der sie mit Gut beaufschlagbar ist.

10. Maschine nach einem der vorhergehenden Ansprüche, **dadurch gekennzeichnet, dass** die Fördereinrichtung (24) in Fahrtrichtung der Maschine (10) hinter einer Einzugs- und Mäheinrichtung (13) angeordnet ist, die sich gleichsinnig mit der Fördereinrichtung (24) dreht und durch die Wand (38) von der Fördereinrichtung (24) getrennt ist.

## Claims

1. Machine (10) for cutting stalk-like harvested crop, having one or more gathering and cutting devices (11, 12, 13), arranged side by side for cutting off and conveying the harvested crop, and a conveying duct (22), through which the harvested crop may be conveyed by means of a drivable conveying device (24) provided with entraining members (25, 27) into the gathering duct (29) of a harvester, the conveying duct (22) comprising a wall (20) adjacent the conveying device (24) and a wall (38) on the opposite side of the conveying duct (22) from the conveying device (24), **characterized in that** the conveying device (24) is provided above the conveying duct (22) with entraining members (27), whose envelope circle extends on the opposite side of the conveying duct (22) from the conveying device (24) beyond the wall (38) located there of the conveying duct (22).

2. Machine (10) according to Claim 1,
**characterized in that** a cover (40) is arranged on the opposite side of the conveying duct (22) from the conveying device (24), which cover overlaps the envelope circle of the entraining members (27).

3. Machine according to Claim 2, **characterized in that** at least one gathering and cutting device (12, 13) is located under the cover (40).

4. Machine (10) according to one of Claims 1 to 3, **characterized in that** the conveying device (24) is a drum conveyor with an at least approximately vertical axis of rotation (26).

5. Machine (10) according to one of Claims 1 to 4,
**characterized in that** the conveying device (24) comprises a number of entraining members arranged in the conveying duct (22), above which entraining members there are arranged the entraining members (27) extending beyond the conveying duct (22), the envelope circle of the entraining members (27) extending beyond the conveying duct (22) being larger than the envelope circle of the entraining members in the conveying duct (22).

6. Machine according to one of Claims 1 to 5, **characterized in that**, above the entraining members (27), the conveying device (24) comprises a number of entraining members (25) whose envelope circle is of smaller diameter than the envelope circle of the entraining members (27) extending beyond the conveying duct (22).

7. Machine (10) according to one of the preceding claims, **characterized in that** the conveying device (24) is set up to transport the crop transversely of the direction of travel of the machine (10) and/or backwards contrary to the direction of travel of the machine (10) in the direction of the gathering duct (29) of a harvester.

8. Machine (10) according to one of Claims 1 to 7, **characterized in that** the conveying device (24) is set up to transport the crop obliquely backwards and upwards.

9. Machine (10) according to one of the preceding claims, **characterized in that** the conveying device (24) is arranged downstream, in the direction of travel of the machine (10), of a conveying duct (22) extending transversely of the direction of travel and rotates in the opposite direction from a gathering and cutting device (12) from which the crop arrives.

10. Machine according to one of the preceding claims, **characterized in that** the conveying device (24) is arranged downstream, in the direction of travel of the machine (10), of a gathering and cutting device (13) which rotates in the same direction as the conveying device (24) and is separated from the conveying device (24) by the wall (38).

## Revendications

1. Machine (10) pour faucher des plantes à tiges, comportant un ou plusieurs dispositifs d'introduction et de coupe (11, 12, 13), agencés latéralement les uns à côté des autres et destinés à couper et transporter les végétaux, et un conduit de transport (22), à travers lequel les végétaux récoltés peuvent être transportés vers le conduit d'admission (29) d'une machine de récolte au moyen d'un dispositif de transport (24) actionnable, muni d'entraîneurs (25, 27), ledit conduit de transport (22) comportant une paroi (20) adjacente au dispositif de transport (24) et une paroi (38) sur le côté du conduit de transport (22) situé en face du dispositif de transport (24), **caractérisée en ce que** le dispositif de transport (24), au-dessus du conduit de transport (22), est muni d'entraîneurs (27), dont l'enveloppante s'étend sur le côté du conduit de transport (22) en face du dispositif de transport (24) jusqu'au-delà de la paroi (38) du conduit de transport (22).

2. Machine (10) selon la revendication 1, **caractérisée en ce que** sur un côté du conduit de transport (22), situé en face du dispositif de transport (24), est agencé un cache (40) qui couvre l'enveloppe des entraîneurs (27).

3. Machine (10) selon la revendication 2, **caractérisée en ce qu'**au moins un dispositif d'introduction et de coupe (12, 13) est situé en dessous du cache (40).

4. Machine (10) selon l'une quelconque des revendications 1 à 3, **caractérisée en ce que** le dispositif de transport (24) est un tambour de transport avec un axe de rotation (26) au moins sensiblement vertical.

5. Machine (10) selon l'une quelconque des revendications 1 à 4, **caractérisée en ce que** le dispositif de transport (24) comporte une pluralité d'entraîneurs, agencés dans le conduit de transport (22), au-dessus desquels sont agencés les entraîneurs (27) qui s'étendent au-delà du conduit de transport (22), l'enveloppante des entraîneurs (27), qui s'étendent au-delà du conduit de transport (22), étant plus grande que l'enveloppante des entraîneurs dans le conduit de transport (22).

6. Machine (10) selon l'une quelconque des revendications 1 à 5, **caractérisée en ce que** le dispositif de transport (24), au-dessus des entraîneurs (27), comporte une pluralité d'entraîneurs (25), dont l'enveloppante a un diamètre plus petit que celui de l'enveloppante des entraîneurs (27) qui s'étendent au-delà du conduit de transport (22).

7. Machine (10) selon l'une quelconque des revendications précédentes,
**caractérisée en ce que** le dispositif de transport (24) est conçu pour transporter les végétaux transversalement à la direction de déplacement de la machine (10) et/ou dans le sens opposé à la direction de déplacement de la machine (10) vers l'arrière en direction du conduit d'admission (29) d'une machine de récolte.

8. Machine (10) selon l'une quelconque des revendications 1 à 7,
**caractérisée en ce que** le dispositif de transport (24) est conçu pour transporter les végétaux en oblique vers l'arrière et le haut.

9. Machine (10) selon l'une quelconque des revendications précédentes, **caractérisée en ce que** le dispositif de transport (24), par référence à la direction de déplacement de la machine (10), est monté en aval d'un conduit de transport (22), orienté transversalement à la direction de déplacement, et tourne dans le sens opposé à un dispositif d'introduction et de coupe (12), duquel il reçoit les végétaux.

10. Machine (10) selon l'une quelconque des revendications précédentes, **caractérisée en ce que** le dispositif de transport (24), par référence à la direction de déplacement de la machine (10), est monté en aval d'un dispositif d'introduction et de coupe (13), qui tourne dans le même sens que le dispositif de transport (24) et est séparé du dispositif de transport (24) par la paroi (38).
